**Europäisches Patentamt**

**European Patent Office**

**Office européen des brevets**

(19)

(11) Veröffentlicnungsnummer: **0 199 905**
**B1**

(12) # EUROPÄISCHE PATENTSCHRIFT

(45) Veröffentlichungstag der Patentschrift:
09.08.89

(21) Anmeldenummer: 86101565.9

(22) Anmeldetag: 06.02.86

(51) Int. Cl.⁴: **C 22 B 41/00**, C 22 B 58/00,
C 22 B 3/00, C 01 G 15/00,
C 01 G 17/00

(54) **Verfahren zur Flüssig-Flüssig-Extraktion von Germanium oder Indium aus wässrigen Lösungen.**

(30) Priorität: 07.03.85 DE 3508041

(43) Veröffentlichungstag der Anmeldung:
05.11.86 Patentblatt 86/45

(45) Bekanntmachung des Hinweises auf die Patenterteilung: 09.08.89 Patentblatt 89/32

(84) Benannte Vertragsstaaten:
AT BE DE FR IT NL

(56) Entgegenhaltungen:
EP–A– 0 000 457
EP–A– 0 068 541
EP–A– 0 102 882
EP–A– 0 143 749
EP–A– 0 167 414
FR–A– 1 383 992
FR–A– 2 277 897
US–A– 3 637 711
Die Akte enthält technische Angaben, die nach dem Eingang der Anmeldung eingereicht wurden und die nicht in dieser Patentschrift enthalten sind.

(73) Patentinhaber: PREUSSAG Aktiengesellschaft Metall
Rammelsberger Strasse 2
D-3380 Goslar 1 (DE)

(72) Erfinder: Hanusch, Kunibert, Dr. Ing.
Schützenallee 10
D-3380 Goslar 1 (DE)
Erfinder: Krajewski, Wolfgang, Dr.-Ing.
Weissdornweg 1
D-3380 Goslar 1 (DE)

(74) Vertreter: Rücker, Wolfgang, Dipl.-Chem.
Hubertusstrasse 2
D-3000 Hannover 1 (DE)

EP 0 199 905 B1

**Beschreibung**

Die Erfindung betrifft ein Verfahren zur Flüssig-Flüssig-Extraktion von Germanium oder Indium aus sauren oder basischen wäßrigen Lösungen.

Germanium und Indium sind wichtige Grundstoffe der Halbleitertechnik. Germanium findet Verwendung als Dotierungsmittel in SiO$_2$-Lichtwellenleitern und vor allem in der Ultrarotoptik sowie als Detektormaterial. Das Indium unterliegt vielseitigen Verwendungsmöglichkeiten bei Lagermetallen, Spezialloten, als Magnetwerkstoff in der Hochfrequenztechnik und im Transistorbau sowie als Salze in der Lampen-, Glas- und Keramikindustrie oder als Bestandteil metallischer Verbindungen in der Meß-, Kondensator-, Thermistor- und Infrarottechnik.

Den Metallen gemeinsam ist das Vorkommen in nur geringen Konzentrationen und als Begleitmineralien vor allem in Aluminium-, Blei-, Kupfer- und Zinkerzen. So fallen Ge und In mehr oder weniger angereichert in Zwischen- oder Abfallprodukten der Metallurgie dieser Basismetalle an. Einer weiteren Anreicherung vor dem Gewinnungsprozeß kommt eine besondere Bedeutung zu. Hierzu sind Laugungs-, Fällungs-, Zementations-, Adsorptions-, Chlorierungs- und Elektrolyseverfahren sowie der Einsatz von Ionenaustauscherharzen entwickelt worden.

Die Verwendung von möglichst selektiv wirkenden Solventextraktionsmitteln kann ebenfalls zu günstigen Anreicherungen in der Reextraktionslösung oder einem Zwischenprodukt führen, wenn hohe Extraktionskapazität und Reextraktionseffektivität vorliegen.

So ist z. B. aus der DOS 24 23 355 bekannt, zur Extraktion von Germanium das Oxim 19-Hydroxyhexatriaconta-9,28-dien-18-oxim gelöst in einem organischen Lösungsmittel einzusetzen.

In der europäischen Patentschrift 68 541 wird die Verwendung eines substituierten 8-Hydroxyquinolins als Extraktionsmittel beschrieben, welches in einem organischen Lösungsmittel gelöst und bei bestimmten Temperaturen angewendet werden soll.

Nachteilig bei der Verwendung einer Verbindung wie im Stand der Technik angegeben ist einmal die Neigung solcher Verbindungen, andere Metallionen mit zu fassen, z. B. Cu und in wechselnden Mengen, je nach Ausgangsmaterial und Konzentrationen, also nicht immer ausreichend selektiv zu sein. So muß z. B. Cu vorher durch spezielle Verfahren eliminiert werden, z. B. durch Zementation im sauren Medium. Außerdem geht bei einem solchen Solventextraktionsverfahren die Phasentrennung oft so langsam vor sich, daß das Verfahren erschwert und unwirtschaftlich wird.

Aufgabe der vorliegenden Erfindung ist es, ein Verfahren der eingangs beschriebenen Art vorzuschlagen für eine Solventextraktion unter Verwendung von Hydroxychinolinen das technisch fortschrittlicher ist und eine verbesserte Selektivität sowie Kapazität für die genannten Elemente besitzt, eine schnellere Phasentrennung bewirkt und eine optimale Einstellung der Dichte und Viskosität der organischen Phase ermöglicht unter Berücksichtigung der anderen Verfahrensparameter.

Gelöst wird diese Aufgabe durch die Verwendung eines Gemisches aus wenigstens zwei Hydroxychinolinen unterschiedlicher Dichte, Molekulargewichte und Viskosität.

Besonders vorteilhaft ist die Verwendung von Gemischen unterschiedlicher Mengen von 7-[4-ethyl-1-methyl-octyl]-8-Hydroxichinolin (Handelsname « Kelex 100 » von der Firma Sherex Chemical Company, Inc. in Dublin, USA) mit folgenden Kennzahlen :

Molekulargewicht : 299 Dichte (20 °C) : 0,986 [g/ml]

Flammpunkt : > 93 [ºC] Viskosität : 150 [cPs] (25 °C) Mit einem 7-Alkenyl-8-Hydroxychinolin (Handelsname « LIX 26 » der Firma Henkel Corporation in Minneapolis) mit folgenden Kennzahlen :

Molekulargewicht : 315 Dichte (20 °C) : 0,98 [g/ml]

Flammpunkt : > 100 [ºC] Viskosität : 270 [cPs] (30 °C)

In Verfolg des Erfindungsgedankens bewegen sich die Gemische der beiden oben genannten Hydroxychinoline im Bereiche zwischen 8 bis 50 Vol.-% « Kelex 100 », während das oder die anderen Hydroxychinoline den Rest zu 100. Vol.-% bilden.

Obwohl das obige Gemisch von Hydroxychinolinen überraschend gute Ergebnisse liefert, so können doch auch andere Gemische gebildet werden mit mehreren und anderen Hydroxychinolinen, z. B. solchen, die in der US-PS 3 637 711 beschrieben sind.

Es ist ferner bekannt, aus der FR-A 2 277 897, der EP-A 457 und EP-A 102 882 Gallium durch Flüssig-Flüssig-Extraktion zu gewinnen unter Verwendung eines Extraktionsmittels, das mindestens ein Hydroxychinolin enthält.

In jedem Falle gestattet die Verwendung eines solchen erfindungsgemäßen Gemisches von Hydroxychinolinen die Optimierung des Solventextraktionsverfahrens durch sich einstellende synergistische Effekte, wodurch die Extraktionskapazität des Gemisches höher liegt als die der einzelnen Hydroxychinoline.

Wird nämlich ein Gemisch von Hydroxychinolinen als Extraktionsmittel eingesetzt, so kann erreicht werden, daß infolge des synergistischen Effektes die Extraktionskapazität des Gemisches höher liegt als die der einzelnen Hydroxychinoline.

Zusätzlich können über die Gemischanteile die Dichte und die Viskosität der organischen Phase so optimiert werden, daß schnelle Phasentrennung $V_{org.}/V_{aqu.}$ erreicht wird. Auch die Selektivität sowie die Reextraktionseffektivität können durch die Hydroxychinolinanteile im Gemisch beeinflußt werden, das mit Art und Menge an Modifiern und Lösungsmittel auf die spezielle Extraktionsverwendung optimiert werden kann, wobei auch die Temperaturen der Prozeßschritte merklichen Einfluß nehmen können. Durch einfache pH-Einstellung lassen sich aus solchen Reextraktionslösungen die Hydroxide und nach einer Wärmebehandlung die angereicherten Oxide gewinnen. Zur restlosen Entfernung der organischen Phase kann ein Nachwaschen notwendig werden.

Das Verfahren zur Flüssig-Flüssig-Extraktion betrifft hauptsächlich die Elemente Germanium oder Indium zur Gewinnung eines angereicherten Konzentrates aus sauren oder basischen wäßrigen Lösungen. Durch die Flüssig-Flüssig-Extraktion mit einem Gemisch von Hydroxychinolinen der oben beschriebenen Art ergibt sich ein Extraktions- und Anreicherungsverfahren für Ge oder In, das infolge des synergistischen Effektes hohe Extraktionskapazität aufweist ; durch die Wahl der Hydroxychinolinanteile im Gemisch wird eine hohe Anpassungsfähigkeit an Dichte und Viskosität erreicht und damit das Phasentrennvermögen $V_{org.}/V_{aqu.}$ verbessert, und es kann über Art und Menge von Modifier und Lösungsmittel optimal dem Solventextraktionsprozeß angeglichen werden.

Als Modifier dienen Tri-n-Butylphosphat (TBP) und/oder Tri-n-Octylphosphinoxid (TOPO) und Isodecanol, gelöst in Kerosin. Es wird bei Raumtemperatur oder erhöhter Temperatur extrahiert und bei erhöhter Temperatur, vornehmlich bei 55 °C, mit alkalischer Lösung (z. B. 100 bis 250 g NaOH/l) reextrahiert. Die organische Solventextraktionslösung läuft im Kreislauf. Aus der alkalischen, angereicherten Reextraktionslösung kann, durch pH-gesteuerte Fällung, ein Ge- bzw. In-Konzentrat gewonnen werden. Zur Entfernung restlicher organischer Phase kann das Fällprodukt einem Waschprozeß, vornehmlich mit einem organischen Lösungsmittel, unterworfen werden.

Für einen Dauereinsatz der organischen Phase kann eine Wasser- oder Säurewaschstufe zwischen Reextraktion und Extraktion vorgesehen werden.

Die Erfindung wird anhand der nachfolgend aufgeführten Beispiele und Vergleichsbeispiele näher erläutert.

## Beispiel 1

Aus einer sauren sulfatischen Lösung, wie sie zum Beispiel bei der Laugung eines Flugstaubes anfällt (220 mg Ge/l ; 110 g Zn/l ; 32 g $H_2SO_4$/l), wird bei 35 °C Germanium durch Solventextraktion mit einer Extraktionslösung auf der Basis von 15 Vol.-% eines Hydroxychinolingemisches, bestehend aus 10 Vol.-% « Kelex 100 » und 90 Vol.-% « LIX 26 » mit 40 Vol.-% Isodecanol und 0,1 mol TOPO, gelöst in Kerosin, bei einer Germanium-Extraktionskapazität von 0,6 g Ge/l organischer Phase extrahiert und bei 55 °C mit einem Volumenverhältnis $V_{org.} : V_{aqu.} = 10 : 1$ mit einer alkalischen Lösung (200 g NaOH/l) reextrahiert. Aus der Reextraktionslösung wird nach pH-Einstellung auf 9,5 mit HCl Germaniumhydroxid gefällt. Nach Abfiltration. Waschen und Trocknung entfällt der Rückstand 45 % $GeO_2$, das Filtrat < 50 mg Ge/l.

## Beispiel 2

Aus einer schwefelsauren Lösung (3.5 g In/l) wird bei 35 °C Indium durch Solventextraktion mit einer Extraktionslösung auf der Basis von 15 Vol.-% eines Hydroxychinolingemisches, bestehend aus 10 Vol.-% « Kelex 100 » und 90 Vol.-% « LIX 26 » mit 40 Vol.-% Isodecanol und 0,1 mol TOPO, gelöst in Kerosin, mit einer Extraktionskapazität von 0,5 g In/l organische Phase mehrstufig extrahiert und nachfolgend bei 55 °C und einem Volumenverhältnis von $V_{org.} : V_{aqu.} = 10 : 1$ mit einer sauren Lösung (196 g $H_2SO_4$/l) reextrahiert. Der Anreicherungsfaktor in der Reextraktionslösung beträgt ca. 10.

## Beispiel 3

Aus einer sauren sulfatischen Lösung (140 mg Ge.l ; 53 g Zn/l ; 25 g freie $H_2SO_4$/l) wird bei 35 °C Germanium durch Solventextraktion mit einer Extraktionslösung auf der Basis von 15 Vol.-% eines Hydroxychinolingemisches, bestehend aus 50 Vol.-% « Kelex 100 » und 50 Vol.-% « LIX 26 » mit 25 Vol.-% Isodecanol und 0,05 mol TOPO, gelöst in Kerosin, bei einem Volumenverhältnis $V_{org.} : V_{aqu.} = 1 : 1$ mit einer Extraktionskapazität von 0,13 g GE/l organische Phase einstufig extrahiert und nachfolgend bei 55 °C und einem Volumenverhältnis $V_{org} : V_{aqu} = 10 : 1$ mit einer alkalischen Lösung (200 g NaOH/l) reextrahiert. Der Anreicherungsfaktor für Germanium in der Reextraktionslösung beträgt ca. 8.

## Beispiel 4

Aus einer germaniumhaltigen schwefelsauren Lösungen (140 mg Ge/l, 53 g Zn/l, 25 g $H_2SO_4$/l) wird bei 35 °C und einem Volumenverhältnis von $V_{aqu.} : V_{org.} = 1 : 1$ mit einer Extraktionslösung auf der Basis von 15 Vol.-% Hydroxychinolingemisch nach Beispiel 1 mit 25 Vol.-% Isodecanol und 0,05 mol TOPO gelöst in Kerosin Germanium bis auf einen Restgehalt vo < 5 mg Ge/l extrahiert. Die Reextraktion erfolgt bei 60 °C und einem Volumenverhältnis von $V_{org} : V_{aqu} = 10 : 1$ mit einer alkalischen Lösungen (200 g NaOH/l). Der Ge-Anreicherungsfaktor beträgt 6.

## Beispiel 5

Aus einer germaniumhaltigen schwefelsauren Lösung (504 g Ge/l, 20 g Zn/l, 22 g Vu/l, 9 g Fe/l, 50 g $H_2SO_4$/l) wird mit einer Extraktionslösung auf der Basis von 10 Vol.-% Hydroxychinolingemisch* 25 Vol.-% Isodecanol und 0,05 mol TOPO gelöst in Kerosin bei 35 °C und einem Volumenverhältnis von $V_{aqu} : V_{org} = 1 : 1$ Germanium bis auf Restgehalte < 10 mg Ge/l extrahiert. Bei der Reextraktion mit einer alkalischen Lösung (200 g NaOH/l) bei 55 °C und einem Volumenverhältnis von $V_{org} : V_{aqu} = 10 : 1$ wird eine Ge-Anreicherung von 1 : 8 erreicht.

## Beispiel 6

Aus einer indiumhaltigen schwefelsauren Lösung (3,5 g In/l, 35 g $H_2SO_4$/l) wird durch Solventextraktion bei 35 °C und einem Volumenverhältnis von $V_{aqu} : V_{org} = 1 : 5$ Indium extrahiert. Die Extraktionslösung basiert auf 10 Vol.-% Hydroxychinolingemisch* 25 Vol.-% Isodecanol und 0,1 mol TOPO gelöst in Kerosin. Die Reextraktion mit 3n $H_2SO_4$-Lösung bei 60 °C und einem Volumenverhältnis von $V_{org} : V_{aqu} = 20 : 1$ führt zu einer Indium-Anreicherung um den Faktor 5.

*Hydroxychinolingemisch gemäß Beispiel 1.

Beispiele für den vergleichenden Einsatz eines einfachen Hydroxychinolins (Oxim) :

## Vergleichsbeispiel 1

Aus einer schwefelsauren Lösung (140 mg Ge/l ; 25 g freie $H_2SO_4$/l) wird bei 35 °C Germanium durch Solventextraktion mit einer Extraktionslösung (15 Vol.-% « Kelex 100 » ; 40 Vol.-% Isodecanol und 0,05 mol TOPO gelöst in Kerosin) bei einem Volumenverhältnis von $V_{aqu} : V_{org} = 1 : 1$ mit einer Extraktionskapazität von 0,08 g Ge/l organ. Phase extrahiert und nachfolgend bei 60 °C und einem Volumenverhältnis von $V_{org} : V_{aqu} = 10 : 1$ mit einer alkalischen Lösung (220 g NaOH/l) reextrahiert. Der Anreicherungsfaktor für Germanium in der Reextraktionslösung beträgt ca. 3.

## Vergleichsbeispiel 2

Aus einer schwefelsauren Lösung (15 Vol.-% « Kelex 100 » ; 25 g freie $H_2SO_4$/l) wird bei 35 °C Germanium durch Solventextraktion mit einer Extraktionslösung (10 Vol.-% Kelex 100 ; 25 Vol.-% Isodecanol und 0,1 mol TBP gelöst in Kerosin) bei einem Volumenverhältnis von $V_{aqu} : V_{org} = 1 : 1$ mit einer Extraktionskapazität von 0.01 g Ge/l organ. Phase extrahiert. Nachfolgend wird bei 55 °C und einem Volumenverhältnis von $V_{org} : V_{aqu} = 10 : 1$ mit einer alkalischen Lösung (200 g NaOH/l) reextrahiert. Der Anreicherungsfaktor für Germanium in der Reextraktionslösung beträgt ca. 2.

Die schließlich beigefügten Vergleichsbeispiele 1 und 2 verwenden keine Hydroxychinolingemische gemäß der Erfindung, sondern einfache Hydroxychinoline, nämlich nur « Kelex 100 ». Man sieht daraus, daß der Anreicherungsfaktor für Germanium im Vergleichsbeispiel 1 lediglich 3 und der Anreicherungsfaktor im Vergleichsbeispiel 2 sogar nur 2 beträgt. Die erfindungsgemäße Mischung ist also um· ein Vielfachen besser und damit fortschrittlicher als die Verwendung eines einfachen Hydroxychinolins.

## Patentansprüche

1. Verfahren zur Flüssig-Flüssig-Extraktion von Germanium oder Indium aus sauren oder basischen wäßrigen Lösungen, dadurch gekennzeichnet, daß als Extraktionsmittel ein Gemisch aus wenigstens zwei Hydroxychinolinen unterschiedlicher Dichte, Molekulargewicht und Viskosität verwendet wird.

2. Verfahren nach Anspruch 1, dadurch gekennzeichnet, daß das Gemisch aus zwei Hydroxychinolinen besteht, von denen das eine 7[4-ethyl-1-methyl-octyl]-8-Hydroxichinolin ist, während das andere Hydroxychinolin ein 7-Alkenyl-8-Hydroxichinolin ist.

3. Verfahren nach Anspruch 2, dadurch gekennzeichnet, daß das 7-Alkyl-8-Hydroxichinolin 8 bis 50 Vol.-% ausmacht, während das 7-Alkenyl-8-Hydroxichinolin den Rest zu 100 Vol.-% bildet.

4. Verfahren nach den Ansprüchen 2 und 3, dadurch gekennzeichnet, daß das 7-Alkyl-8-Hydroxichinolin 10 Vol.-% und das 7-Alkenyl-8-Hydroxichinolin 90 Vol.-% des Gemisches bildet.

5. Verfahren nach den Ansprüchen 1 bis 4, dadurch gekennzeichnet, daß das Hydroxichinolingemisch mit 25-40 Vol.-% Isodecanol und 0,1 mol Tri-n-Octylphosphinoxid in einer solchen Menge Kerosin gelöst wird, daß sich ein Gemisch mit einem Hydroxichinolingehalt von 15 Vol.-% ergibt.

6. Verfahren nach den Ansprüchen 1 bis 5, dadurch gekennzeichnet, daß man das Hydroxychinolingemisch mit Lösungsmitteln, Lösungsvermittlern und anderen Bestandteilen einsetzt und ein- oder mehrstufig extrahiert und bei 55 °C, mit einer alkalischen oder sauren Lösung reextrahiert.

**Claims**

1. Process for the liquid-liquid extraction of germanium or indium from acid or base aqueous solutions, characterized in that, that as extraction means a mixture of at least two hydroxyquinolines of different density, molecular weight and viscosity are used.

2. Process according to claim 1, characterized in that, that the mixture contains two hydroxyquinolines of which one is a 7(4-ethyl-1-methyl-octyl)-8-hydroxyquinoline whereas the other hydroxyquinoline is a 7-alkenyl-8-hydroxyquinoline.

3. Process according to claim 2, characterized in that, that the 7-alkyl-8-hydroxyquinoline comprises 8 to 50 volume % and the 7-alkenyl-8-hydroxyquinoline the remaining volume to 100 volume %.

4. Process according to claims 2 and 3, characterized in that, that the 7-alkyl-8-hydroxyquinoline forms 10 volume % and the 7-alkenyl-8-hydroxyquinoline 90 volume % of the mixture.

5. Process according to claims 1 to 4, characterized in that, that the hydroxyquinolines are mixed with about 25 to 40 volume % of isodecanol and 0.1 mole of tri-n-octylphosphineoxide dissolved in a quantity of kerosene resulting in a mixture containing 15 volume % of the hydroxyquinolines.

6. Process according to claims 1 to 5, characterized in that, that the hydroxyquinolines mixture is used together with solvents, solution mediators and other components, said mixture being extracted in one or more stages and being re-extracted at temperatures of 55 °C with an alkaline or acidic solution.

**Revendications**

1. Procédé pour l'extraction liquide-liquide de germanium ou d'indium à partir de solutions aqueuses acides ou basiques, caractérisé en ce qu'on utilise comme agent d'extraction un mélange d'au moins deux hydroxyquinoléines présentant des masses volumiques, des masses moléculaires et des viscosités différentes.

2. Procédé selon la revendication 1, caractérisé en ce que le mélange est constitué de deux hydroxyquinoléines, l'une de celle-ci étant la 7(4-éthyl-1-méthyl-octyl)-8-hydroxyquinoléine, tandis que l'autre hydroxyquinoléine est une 7-alcényl-8-hydroxyquinoléine.

3. Procédé selon la revendication 2 caractérisé en ce que la 7-alkyl-8-hydroxyquinoléine compte pour 8 à 50 % en volume, tandis que la 7-alcényl-8-hydroxyquinoléine forme le complément à 100 % en volume.

4. Procédé selon les revendications 2 et 3 caractérisé en ce que la 7-alkyl-8-hydroxyquinoléine forme 10 % en volume du mélange et la 7-alcényl-8-hydroxyquinoléine 90 % en volume du mélange.

5. Procédé selon les revendications 1 à 4, caractérisé en ce que le mélange d'hydroxyquinoléines est dissous, avec 25-40 % en volume d'isodécanol et 0,1 mole d'oxyde de tri-n-octylphosphine, dans une quantité de kérosène telle qu'il se forme un mélange ayant une teneur en hydroxyquinoléine de 15 % en volume.

6. Procédé selon les revendications 1 à 5, caractérisé en ce qu'on utilise le mélange d'hydroxyquinoléines avec solvants, des tiers-solvants et d'autres constituants, et qu'on l'extrait en une ou plusieurs étapes, et qu'on le réextrait à 55 °C, avec une solution alcaline ou acide.